# EUROPEAN PATENT APPLICATION

(11) **EP 3 200 550 A1**
(43) Date of publication of application: **02.08.2017**
(21) Application number: 16305095.8
(22) Date of filing: 29.01.2016
(51) Int. Cl.: H04W 76/02, H04W 8/00

(54) **METHOD FOR SHARING RESOURCES BETWEEN MOBILE DEVICES THANKS TO A LOCATION TRACKING SERVER**

(71) Applicant: ALCATEL LUCENT, 92100 Boulogne-Billancourt (FR)
(72) Inventor: ORLANDI, Barbara, 91620 NOZAY (FR); LAFRAGETTE, Jean-Luc, 91620 NOZAY (FR)
(74) Representative: Novagraaf Technologies

(57) **Abstract**

This invention relates to a system comprising a first mobile device (A), a second mobile device (B) and a location tracking server (S), said mobile devices being able to establish device-to-device direct connection and means for executing a neighbor awareness function to determine clusters made of neighbor mobile devices, and for joining at least a subset of said clusters; and said location tracking server (S) being adapted to receive from said mobile devices identification of the clusters of said subset, and to detect that said first and second mobile devices are in proximity by determining a least one common cluster, according to said identifications; and, as a result, to provision configuration data to said mobile devices, so as to trigger said mobile devices to establish a direct connection, enabling sharing said resource.

## Description

### FIELD OF THE INVENTION

The present invention relates to the field of telecommunication. More particularly, it concerns the share of resources between mobile devices in proximity.

### BACKGROUND OF THE INVENTION

Recent mobile devices, like tablets and smartphones, have device-to-device connection capabilities, like Wi-Fi direct, enabling the mobile devices to establish direct connections, without making use of a radio access network (RAN) or any operator or third-party infrastructure.

Such capabilities enable alternate usage of the devices, like sharing locally some contents like large files, e.g. videos, or deploying applications using local interactions between devices. However, although these new usages are appealing, they are not massively used, notably because of the difficulty of establishing trust towards an unknown device and of the lack of control by a trusted third-party like an operator. Furthermore, the operator cannot make use easily of the device-to-device connection capabilities of the devices for its own purpose, loosing then a way of optimizing the network resources.

Accordingly, there is a need for improving the situation so as to provide a mechanism for device-to-device connections taking into account both the interests of the end users and of the mobile network operators.

### SUMMARY OF THE INVENTION

The object of the present invention is to alleviate at least partly the above mentioned drawbacks.

More particularly, the invention aims to mix the decentralized device-to-device approach with an operator-centric approach, so as to provide trusted device-to-device connection capabilities which are available both to the users and to the Operator.

This object is achieved with a method for sharing a resource from a first mobile device to a second mobile device, said mobile devices being able to establish device-to-device direct connection, comprising steps consisting in:
- said mobile devices starting a neighbor awareness function to determine clusters made of neighbor mobile devices, and joining at least a subset of said clusters ;
- said mobile devices providing identification of the clusters of said subset, to a location tracking server;
- said location tracking server detects that said first and second mobile devices are in proximity by determining a least one common cluster, according to said identifications; and, as a result, provisions configuration data to said mobile devices, so as to trigger said mobile devices to establish a direct connection, enabling sharing said resource.

Preferred embodiments comprise one or more of the following features, which can be taken separately or together, either in partial combination or in full combination.
- said direct connection is a Wi-Fi direct connection;
- said awareness function complies with a neighbor awareness networking function according to Wi-Fi Alliance specifications;
- said resource is a content stored in said first mobile device (A);
- said first mobile device is connected to a radio access network and said resource is a connection over said radio access network;
- an application server transmits a content to said first mobile device through said radio access network, and said first mobile device transmits said content to said second mobile device through said direct connection;

Another object of the invention is a computer program comprising computer-executable instructions for performing the method as previously defined, when run onto a data processing unit.

Still another object of the invention is a system comprising a first mobile device, a second mobile device and a location tracking server, said mobile devices being able to establish device-to-device direct connection and means for executing a neighbor awareness function to determine clusters made of neighbor mobile devices, and for joining at least a subset of said clusters; and said location tracking server being adapted to receive from said mobile devices identification of the clusters of said subset, and to detect that said first and second mobile devices are in proximity by determining a least one common cluster, according to said identifications; and, as a result, to provision configuration data to said mobile devices, so as to trigger said mobile devices to establish a direct connection, enabling sharing said resource.

Preferred embodiments comprise one or more of the following features, which can be taken separately or together, either in partial combination or in full combination:
- said first mobile device (A) belongs to a radio access network (RAN);
- said location tracking server (S) belongs to said radio access network;

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows an example of network deploying an embodiment of the invention.
Fig. 2 shows a high-level simplified flow chart of an embodiment of the invention.
Fig. 3a shows a particular application according to a solution of the prior art.
Fig. 3b shows the same application according to an embodiment of the invention.

### DETAILED DESCRIPTION OF THE INVENTION

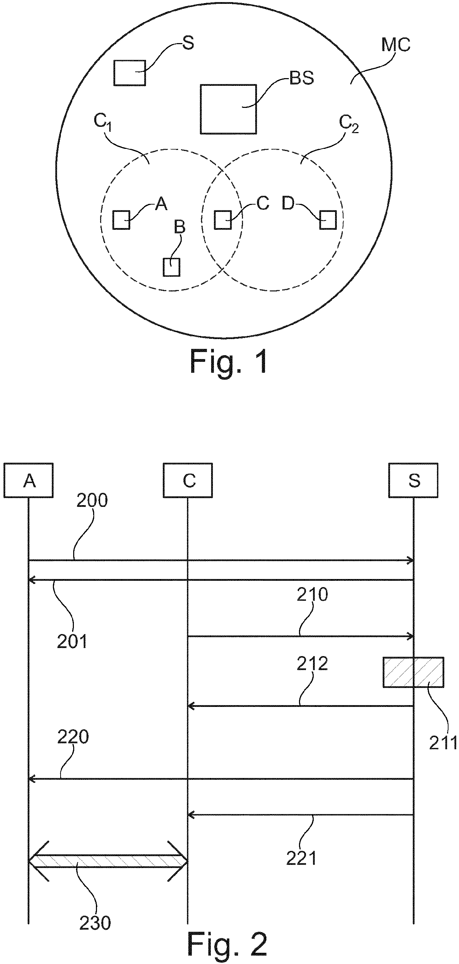

On the example of FIG. 1, 4 mobile devices A, B, C, D are depicted, within a cell MC of a radio access network (RAN). The cell MC is served by a base station BC, which name and specification may depend on the technology (eNodeB, etc.). Its functions include acting as a gateway between the radio access network and the core network.

The network beyond the base station BS is not precisely depicted as it has low impact on the invention, but one supposes that an application server AS is deployed and accessible to the mobile devices which are connected to the base station BS through the radio access network.

Also, only one cell is depicted so as to keep the description clear and concise but the man skilled in the art would naturally consider radio access network with more than one cell.

The mobile devices are supposed to have capabilities to connect to the base station, i.e. 3G, LTE or any other wireless telecommunication technology like Wi-Fi. However, it will appear in the following description that it is sufficient to have one mobile device connected to the base station BS to deploy some embodiments of the invention.

The mobile devices are able to support device-to-device connections with other mobile devices. These connections may be Wi-Fi direct connections. Wi-Fi direct is a technology enabling mobile devices to establish connections with each other directly, whereas legacy Wi-Fi enable connections between the mobile devices and a Wi-Fi access point.

Furthermore, according to the invention, the mobile devices start a neighbor awareness function to determine clusters made of neighbor mobile devices.

This function can be implemented as a process running in background in the mobile device and which continuously tries to discover other mobile devices in its proximity. This function may run over the time so as to react on the moves of mobile devices in a dynamic way. It may not be continuously executing, but may preferably be periodically awaken to refresh the knowledge of the neighborhood.

According to an embodiment of the invention, this awareness function complies with a neighbor awareness networking function (NAN) according to Wi-Fi Alliance specifications. NAN provides Wi-Fi technology with a low-power mechanism, low-bandwidth and continuous service discovery that is run in devices in background to make the devices "neighbor aware". This function is called "Wi-Fi Aware"

The Wi-Fi Aware mechanism defines "clusters" as a collection of NAN-enabled mobile devices that share a common set of NAN parameters and are synchronized in a same Discovery Window (DW). Indeed, to reduce energy consumed by this discovery function, the NAN mobile devices will only be allowed to send messages during reduced "Discovery Window", and all mobile devices of a given cluster should then be synchronized so as to share this time schedule.

Mobile devices have the possibility to join one or several clusters they discover. In the example depicted in FIG. 1, the mobile device C joins both clusters C1 and C2. Mobile devices A and B join only cluster C1, and mobile device D joins only cluster C2. A mobile device has also the possibility to create a new cluster.

Discovery of a cluster is made by the reception of a message broadcasted by a mobile device belonging to this cluster. In other words, the cluster constitutes a logical and geographical area depending on the radio coverage of the individual mobile devices.

According to the invention, the mobile devices provide identification of the clusters they have joined to a location tracking server S (i.e. the clusters they belong to). This location tracking server S keeps tracks of all identifications provided by the mobile devices A, B, C, D, so that it can get an overall knowledge of the clusters within a given area. The identifications of clusters which are received can be stored in a memory of the server S and associated with the concerned mobile device.

In one embodiment of the invention, the location tracking server S belongs to the radio access network and the area can correspond to a cell MC associated with the base station BC. The location tracking server may then be operated by the operator of the radio access network.

The location tracking server S has means to detect that 2 devices are in proximity, by determining that there is at least a common cluster they belong to. This determination can be made from the identifications associated with the devices in the memory of the server S.

It may be sufficient to have 1 common cluster for 2 devices to be considered as "in proximity". The number of common clusters may provide a measurement of a degree of proximity.

For instance, the mobile devices A and C belong to cluster C1 and are thus in proximity. However, the devices A and D do not belong to a same cluster and are not in proximity.

Knowing the topology of the mobile devices within the area (e.g. a cell) associated with it, the location tracking server S can instruct the mobile devices to establish direct connections, when a device needs a resource available at another device.

For instance, a first mobile device A may hold a resource and a second device B may desire access to this resource. The location tracking server S determine that both mobile devices A, B are attached to the cluster C1 and are thus in proximity. Then, it provisions them with the relevant configuration data, so as to trigger the mobile devices A, B to establish a direct connection, enabling them to share this resource.

The direct connection may be a Wi-Fi direct connection.

Preferably, the direct connection complies with the same radio technology than the awareness function, so that a proximity detected by the server S represents an actual technical possibility for devices to establish the direct connection. This is because when two devices belong to a same cluster (here C1), they are by definition in each others' radio coverage, e.g. Wi-Fi coverage.

Once the location tracking server S detects that the mobile devices are in proximity, it can provision configuration data to them. This configuration data allows them to establish a direct connection.

In case of a Wi-Fi direct connection, the configuration data can comprise a PIN code, so that both mobile devices can negotiate automatically a key for a WPA2-secured connection.

According to this embodiment, there is no need anymore for the end users to enter manually the PIN code for establishing the direct connection. The invention allows the mobile devices to establish the direct connection automatically with no action required from the users.

Once the direct connection is established, the resource can be shared between the mobile devices.

The resource can be a content stored in the first mobile device A. For instance, it can be a large file, a video file, etc., that the second mobile device can access to, thanks to a local direct connection, rather than by downloading it from the Internet.

The resource can also be a connection over the radio access network. Accordingly, the second mobile device can get access to a shared connection offered by the first mobile device toward the radio access network.

This embodiment can have various applications.

For instance, at a given time, only the first mobile device can be connected to the radio access network. The second mobile device can have no means to connect to the radio access network (it may have only a Wi-Fi connection, but no cellular connection), or it may be temporarily out of range of the base station of the radio access network. Then, the invention can provide the mobile device with a continuity of service, even when it becomes temporarily disconnected to the mobile network.

FIG. 2 represents the process described above through a high-level flowchart.

A first device A sends a registration request 200 to the location tracking server S, containing identification of the clusters it belongs to. The registration request 200 may also comprise an identification of the cell MC of the radio access network.

The location tracking server S may answer by a reply message 201.

A second device C sends a registration request 210 to the location tracking server S, containing identification of the clusters it belongs to. The registration request 210 may also comprise an identification of the cell MC of the radio access network.

The location tracking server S may answer by a reply message 212.

In step 211, the location tracking server S can determine that the mobile devices A and C are in proximity. This can be determined because the registration requests provided by the mobile devices A, C contain
- identification of the cluster C1 for the mobile device A; and,
- identifications of the clusters C1 and C2 for the mobile device C.

The location tracking server S can determine at least one common cluster, C1, and thus determine they are in proximity.

The location tracking server S can then send messages 220 and 221 to, respectively, the first and second mobile devices, A, C to provision configuration data, allowing them to establish a direct connection 230.

According to the invention, the bandwidth and the networking resources of the radio access network are saved, as well as those of the backbone network. Furthermore, the QoS provided to the users of the mobile devices can be guaranteed to a larger extent as it only depends on local direct connections (Wi-Fi or so).

Furthermore, even if during the direct connection, one or both of the mobile devices become out of range of the base station BS and have no more connection with the radio access network, still resource sharing between the mobile devices A, B can complete without interruption.

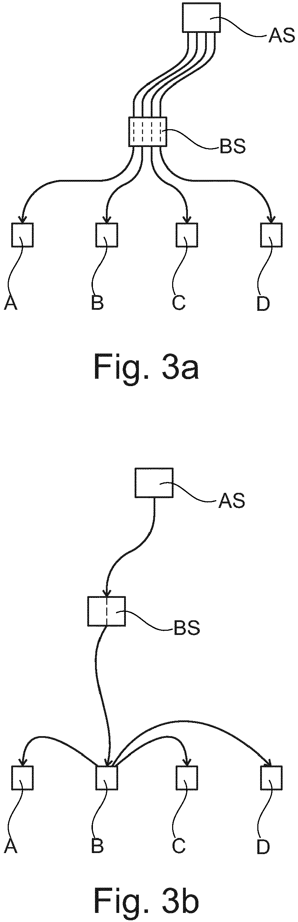

Figs 3a and 3b illustrate a further application of the invention. A set of mobile devices A, B, C, D belongs to a same cluster (not depicted) of a radio access network and can access to an application server AS. The Application Server AS aims at transmitting a content to each of the mobile devices A, B, C, D. This content may be a video stream or file, a software update, etc.

The transmission can be triggered by the application server AS itself, e.g. in the case of the provision of a software update, or it can be triggered by the mobile devices requiring a same content.

Fig. 3a depicts a solution according to the prior art, wherein dataflows are established between the application server AS to each of the registered mobile devices A, B, C, D. The dataflow transmits the resource.

Fig. 3b depicts an application of an embodiment of the invention, wherein a single dataflow is transmitted to unique mobile device B. Then the other mobile device A, C, D can access the resource transmitted by the server by direct connections between them and the mobile device B.

Thanks to this embodiment, the mobile network is loaded by the transmission of single dataflow. In case of the transmission of a large file toward a large number of mobile devices, the bandwidth saving can become very important.

The same scenario may apply in case the mobile devices are connected to a same Wi-Fi access point. In other words, some embodiments of the invention may apply to the Wi-Fi realm and are not limited to cellular networks. Also, one of the device may be connected to a mobile access point and the second one to a Wi-Fi access point.

It should also be noted that there is no necessary immediate sequencing between the provisioning of a content in a first device and its local transmission to second device(s). There may be a time gap between the two events.

For instance, the content may be provisioned at a time the device is connected to a Wi-Fi access point. This is particularly interesting for large files, so as to avoid transmission through a mobile cellular network. Then, the transmission to other devices in the cluster may happen later, as long as the content is still in the memory of the mobile device.

The invention provides operators with new means to leverage their resources and to optimize the network bandwidth consumption.

For instance, an API (Application Programming Interface) can be provided by operator for enabling content providers to get access to this feature.

Instead of directly retrieving content from the internet, a content provider application on the mobile device may use the operator API for proximity services to discover if the sought content is locally available from a nearby device or alternatively to allow the operator to cache locally on the device some content for future use. The API could leverage an operator Wi-Fi Direct service for establishing device-to-device connections advertised as any other Wi-Fi direct service (today such standardized services defined by the Wi-Fi Alliance comprise Play, Print, Display, Send for example).

The invention has been described with reference to preferred embodiments. However, many variations are possible within the scope of the invention.

## Claims

1. Method for sharing a resource from a first mobile device (A) to a second mobile device (B), said mobile devices being able to establish device-to-device direct connection, comprising steps consisting in:
- said mobile devices starting a neighbor awareness function to determine clusters made of neighbor mobile devices, and joining at least a subset of said clusters ;
- said mobile devices providing identification of the clusters of said subset, to a location tracking server (S);
- said location tracking server (S) detects that said first and second mobile devices are in proximity by determining a least one common cluster, according to said identifications; and, as a result, provisions configuration data to said mobile devices, so as to trigger said mobile devices to establish a direct connection, enabling sharing said resource.

2. Method according to the previous claim, wherein said direct connection is a Wi-Fi direct connection.

3. Method according to said previous claim, wherein said awareness function complies with a neighbor awareness networking function according to Wi-Fi Alliance specifications.

4. Method according to any of the previous claims, wherein said resource is a content stored in said first mobile device (A)

5. Method according to any of the claims 1 or 2, wherein said first mobile device is connected to a radio access network and said resource is a connection over said radio access network.

6. Method according to the previous claim, wherein an application server (AS) transmits a content to said first mobile device through said radio access network (RAN), and said first mobile device (A) transmits said content to said second mobile device (B) through said direct connection.

7. Computer program comprising computer-executable instructions for performing the method according to any of the previous claims, when run onto a data processing unit.

8. System comprising a first mobile device (A), a second mobile device (B) and a location tracking server (S), said mobile devices being able to establish device-to-device direct connection and means for executing a neighbor awareness function to determine clusters made of neighbor mobile devices, and for joining at least a subset of said clusters; and said location tracking server (S) being adapted to receive from said mobile devices identification of the clusters of said subset, and to detect that said first and second mobile devices are in proximity by determining a least one common cluster, according to said identifications; and, as a result, to provision configuration data to said mobile devices, so as to trigger said mobile devices to establish a direct connection, enabling sharing said resource.

9. System according to the previous claim, wherein said first mobile device (A) belongs to a radio access network (RAN).

10. System according to the previous claim, wherein said location tracking server (S) belongs to said radio access network.
